# EUROPEAN PATENT APPLICATION

(11) **EP 0 558 110 A1**
(43) Date of publication of application: **01.09.1993**
(21) Application number: 93200248.8
(22) Date of filing: 01.02.1993
(51) Int. Cl.: F02M 37/10, F04D 29/62

(54) **Fuel pump mounting**

(30) Priority: 25.02.1992 US 841176
(71) Applicant: GENERAL MOTORS CORPORATION, Detroit Michigan 48202 (US)
(72) Inventor: Dockery, Randall Lee, Flushing, Michigan 48433 (US)
(74) Representative: Denton, Michael John

(57) **Abstract**

A mounting (42) for an electric fuel pump (28) on a rigid metal return fuel conduit (22) in a fuel tank (10) of an automobile includes a support (44) of plastics material having a centre body (50) with a stepped bore (56) therein for receiving the lower end of the return fuel conduit (22) and a pair of integral flexible arms (54A-B) extending in opposite directions from the centre body (50). The return fuel conduit (22) has an annular shoulder (68) which engages a shoulder (66) on the centre body (50) to limit penetration of the return fuel conduit (22) into the bore (56). The return fuel conduit (22) also has a plurality of lugs (74) thereon permanently deformed into notches (72) in the centre body (22) to capture the centre body (22) between the lugs (74) and the shoulder (58) on the return fuel conduit (22). The flexible arms (54A-B) have wrapped positions around the fuel pump (28) and an annular rubber isolator (46) thereon clamping the fuel pump (28) and the isolator (46) to the centre body (50). A buoyant valve element (76) in a valve chamber (62) in the centre body (50) is biased by its buoyancy to a seated position preventing backflow of fuel from the fuel tank (10) into the return fuel conduit (22).

## Description

This invention relates to a fuel pump mounting for use in an automobile fuel tank.

It is common practice to mount an electric fuel pump on a bracket inside an automobile fuel tank with a vibration isolating bushing between the pump and the bracket. It has also been proposed to clamp a plastic cage to the lower end of a return fuel conduit in an automobile fuel tank and to mount an electric fuel pump in the cage with springs or other vibration isolating elements between the pump and the cage. In some proposals, the cage may be disassembled to remove and replace the pump. In other proposals, the cage has access openings for installing and removing the pump without disassembling the cage.

The present invention seeks to provide an improved fuel pump mounting.

According to an aspect of the present invention, there is provided a fuel pump mounting for use in an automotive fuel tank as specified in claim 1.

In a preferred embodiment, there is provided a support of plastics material having a centre body, a shelf on the centre body, and a pair of integral flexible arms. Advantageously, the lower end of the return fuel conduit penetrates a bore in the centre body until a shoulder on the conduit engages a shoulder on the centre body. The lower end of the return fuel conduit is preferably locally permanently deformed into notches in the centre body to form lugs to prevent dislodgment of the support from and rotation of the support relative to the lower end of the return fuel conduit. The fuel pump seats on the shelf and the flexible arms preferably envelope the pump with an annular rubber isolator between the pump and the support. Latch elements on the distal ends of the flexible arms can releasably clamp the pump to the support. The centre body may further include a valve chamber below the lower end of the return fuel conduit, a valve seat in the valve chamber and a buoyant valve element in the valve chamber, operative to seal against the valve seat to prevent backflow of fuel through the return fuel conduit.

An embodiment of the present invention is described below, by way of illustration only, with reference to the accompanying drawings, in which:
Figure 1 is a fragmentary elevational view, partly in section, of an automotive fuel tank having an electric fuel pump supported therein by an embodiment of fuel pump mounting;
Figure 2 is an exploded perspective view of the fuel pump mounting of Figure 1; and
Figure 3 is a fragmentary perspective view of part of the fuel pump mounting of Figure 1.

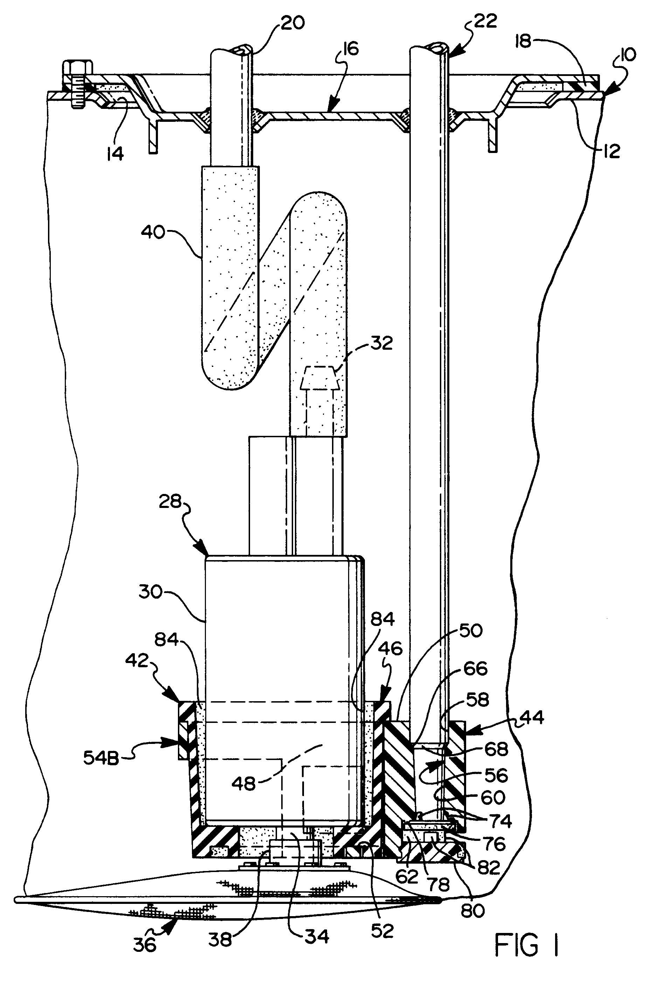

Referring to Figure 1, an automotive fuel tank 10 includes an upper wall 12 having an access port 14 therein. The access port is closed and sealed by a cover 16 and a gasket seal 18. A high pressure connector 20 and a return fuel conduit 22 pass through the cover 16 and are sealed against leakage by crimping and soldering. The return fuel conduit 22 is made of rigid but readily deformable metal, such as aluminium. Hoses, not shown, outside the fuel tank 10 form a high pressure circuit between the connector 20 and a fuel rail of a vehicle fuel injection system and a low pressure circuit between the fuel rail and return fuel conduit 22.

An electric fuel pump 28 in the fuel tank includes a cylindrical housing 30, a discharge port 32 at one end of the housing, an inlet 34 at an opposite end of the housing and a screen 36 having a neck 38 disposed over the inlet. The pump may be of the type described in US-A-4,718,827.

A flexible, high pressure hose 40 is disposed between the discharge port 32 and the connector 20 and conducts fuel under pressure from the pump to the aforesaid high pressure circuit. The pump 28 is supported low in the fuel tank 10 on the return fuel conduit 22 by a fuel pump mounting 42.

The fuel pump mounting 42 includes a support 44 of plastics material and an annular rubber isolator 46. The support 44 has an annular wall segment 48 integral with a centre body 50, an integral shelf 52 at the lower end of the wall segment, and a pair of flexible arms 54A-B integral with and extending in opposite directions from the sides of the wall segment 48. The wall segment 48 and the shelf 52 may be solid or, as illustrated, perforated.

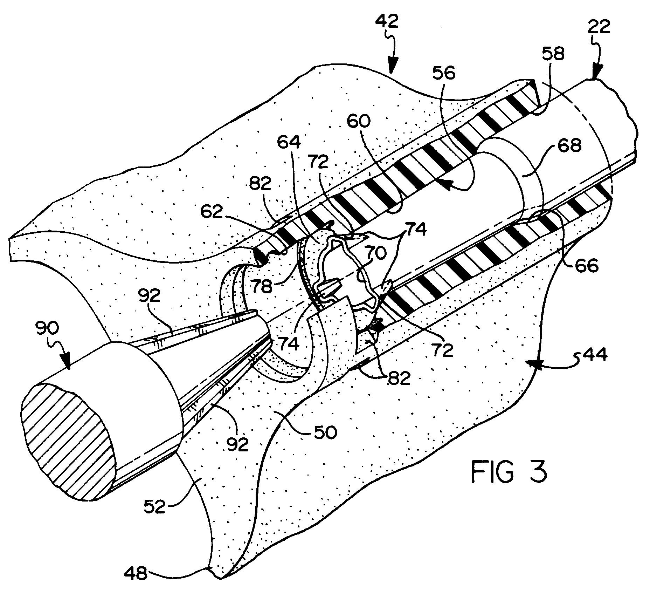

The centre body 50 has a stepped bore 56 therein which is received over the return fuel conduit 22 in the fuel tank. The stepped bore has a large diameter part 58 opening through the top of the centre body 50, a small diameter part 60 opening into a valve chamber 62 in the centre body through a wall 64 of the valve chamber, and a shoulder 66 between the large and small diameter parts. Penetration of the return fuel conduit into the stepped bore 56 is limited by engagement of the shoulder 66 in the bore with a corresponding annular shoulder 68 on the return fuel conduit, the shoulders cooperating to align a lower end 70 of the return fuel conduit 22 with the plane of wall 64 of the valve chamber 62, as best seen in Figure 3.

The centre body 50 has a plurality of notches 72 in the wall 64 of the valve chamber 62 around the small diameter part 60 of the stepped bore. The lower end 70 of the return fuel conduit is locally flared or otherwise permanently deformed to form a plurality of lugs 74 which in use are received in the notches 72 to clamp the centre body rigidly against the shoulder 68 on the return fuel conduit and to prevent dislodgment of the return fuel conduit from the stepped bore 56. The lugs 74 also prevent rotation of the support 44 relative to the return fuel conduit about the longitudinal centreline of the latter.

A buoyant, disc-shaped anti-siphon valve element 76 is disposed in the valve chamber 62. The valve element 76 can move between a seated position against a raised, annular seat 78 on the wall 64 of the valve chamber, around the lower end of the return fuel conduit and an unseated position remote from the seat 78. The valve element 76 is secured in the valve chamber 62 by a cap 80 which fits into an open end of the valve chamber by means of a snap-fit. The valve chamber 62 is coupled to the fuel tank 10 through a plurality of windows 82 in the centre body 50 of the support.

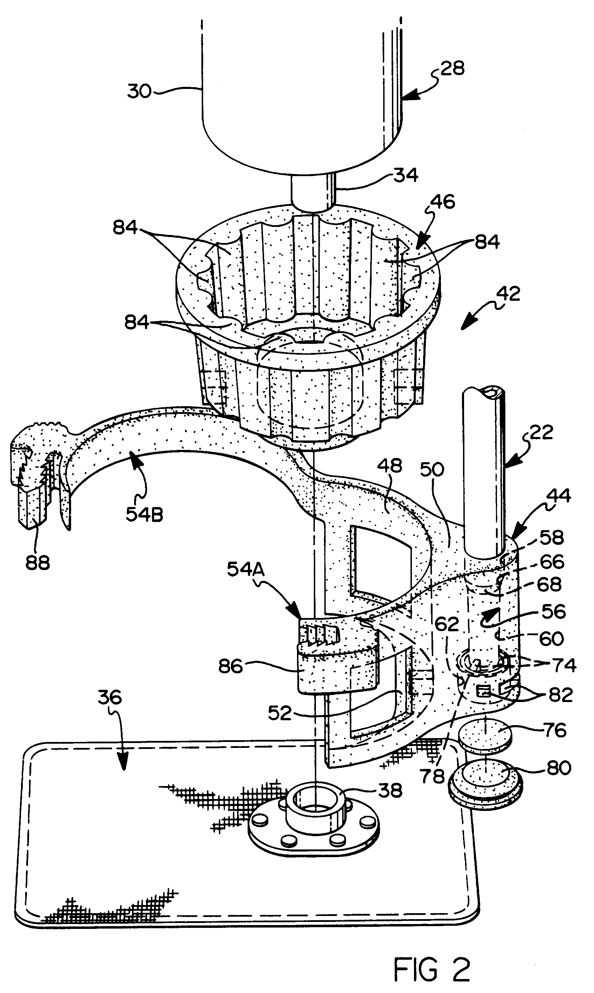

Referring to Figures 1 and 2, the annular rubber isolator 46 has a plurality of internal longitudinal ribs 84 which grip the cylindrical housing 30 of the fuel pump when the isolator 46 is stretched over the lower end of the housing 30. The isolator 46 rests on the shelf 52 so as to support the pump 28 on the centre body 50. The flexible arms 54A-B are wrapped around the isolator and are releasably maintained in the wrapped position by a latch which includes a socket 86 one arm and a tongue 88 on the other arm. The socket and tongue have serrated sides for preventing unintended dislodgment of the tongue from the socket. In their wrapped positions, the flexible arms 54A-B clamp the fuel pump 28 to the support 44 with the rubber isolator 46 therebetween for vibration damping and with sufficient compression to prevent rotation of the fuel pump housing 30 relative to the support. In alternative embodiments, the shelf 52 may be omitted and the fuel pump supported solely by the flexible arms 54A-B.

In operation, a fraction of the fuel pumped by the pump 28 from the fuel tank recirculates back to the tank at low pressure through the return fuel conduit 22. The return fuel exits through the lower end 70 of the return fuel conduit into the valve chamber 62, displacing the buoyant valve element 76 from its seated position, and flowing from the valve chamber into the fuel tank through the windows 82. When the fuel pump is switched off, returned fuel flow ceases and the buoyancy of the valve element 76 moves the latter to its seated position against the valve seat 78, thereby preventing backflow of fuel from the tank through the return fuel conduit.

It is contemplated that the support 44 is assembled to the return fuel conduit 22 in a fixture, not shown, which forms a predetermined angular orientation of the centre body 50 relative to the return fuel conduit and the cover 16. In this case, the pump 28 may be mounted in predetermined position into the fuel tank simply by orienting the cover 16 as desired, relative to the upper wall 12 of the fuel tank.

A simple method of forming the lugs 74 in the notches 72 is illustrated in Figure 3. With the cap 80 removed, a conical tool 90 having a plurality of raised lands 92 is indexed such that the lands 92 are aligned with corresponding notches 72 in the centre body 50. The tool is then forced into the lower end 70 of the return fuel conduit so that the lands 92 locally flare the return fuel conduit to form the lugs 74 in the notches 72.

The disclosures in United States patent application no. 841,176, from which this application claims priority, and in the abstract accompanying this application are incorporated herein by reference.

## Claims

1. A fuel pump mounting for use in an automotive fuel tank including a substantially rigid return fuel conduit (22) supported in the tank and a fuel pump (28); the fuel pump mounting comprising an annular elastomeric isolator (84) in use disposable around the fuel pump; and a support member (44) including a body portion (50) comprising a bore (56) therein for receiving an end (70) of the return fuel conduit, an abutment (66) adapted to abut the return fuel conduit so as to limit penetration of the return fuel conduit into the bore, securing means (74) adapted to secure the body portion to the return fuel conduit in a manner as to prevent dislodgment of the return fuel conduit from the body portion and to prevent rotation of the body portion relative to the return fuel conduit, a pair of flexible arm members (54A-B) extending from the body portion and adapted in use to be wrapped around the elastomeric isolator and the fuel pump, and latch means (86,88) provided on the flexible arm members for securing the two arm members together when wrapped around the elastomeric isolator and the fuel pump.

2. A fuel pump mounting according to claim 1, wherein the abutment (66) of the support member (44) is adapted to abut a shoulder (68) of a return fuel conduit.

3. A fuel pump mounting according to claim 1 or 2, wherein the securing means comprises one or more notches (74) which in use cooperate with one or more lugs on a return fuel conduit, the abutment (66) and the notch or notches (74) in use securing a return fuel conduit in a manner as to prevent dislodgement and rotation of the return fuel conduit relative to the body portion.

4. A fuel pump mounting according to claim 3, wherein the securing means includes a plurality of notches (74), the notches being disposed in the bore of the body portion.

5. A fuel pump mounting according to any preceding claim, comprising a shelf (52) extending from the body portion and on which in use the fuel pump rests.

6. A fuel pump mounting according to any preceding claim, comprising a valve chamber (62) in the body portion adjacent an opening in the bore, one or more apertures in the body portion for permitting fuel flow between the valve chamber and the fuel tank, a valve seat (78) in the valve chamber disposed at the opening in the bore, and a buoyant valve element (76) disposed in the valve chamber and in use being biased by the buoyancy thereof onto the valve seat so as to prevent backflow of fuel from the valve chamber into the return fuel conduit.

7. A fuel pump mounting according to any preceding claim, wherein the latch means (86,88) releasably secures the two arm members (54A-B) together.

8. A fuel pump mounting according to any preceding claim, wherein the support member (44) is made of plastics material.
